# EUROPÄISCHE PATENTSCHRIFT

(11) **EP 1 286 870 B1**
(45) Veröffentlichungstag und Bekanntmachung des Hinweises auf die Patenterteilung: **09.08.2006**
(21) Anmeldenummer: 01919183.2
(22) Anmeldetag: 10.03.2001
(51) Int. Cl.: B60S 1/08

(54) **SCHEIBENWISCHVORRICHTUNG, INSBESONDERE FÜR EIN KRAFTFAHRZEUG**
WIPER SYSTEM, ESPECIALLY FOR A MOTOR VEHICLE
DISPOSITIF ESSUIE-GLACE, EN PARTICULIER POUR VEHICULE AUTOMOBILE

(30) Priorität: 17.05.2000 DE 10024255
(43) Veröffentlichungstag der Anmeldung: 05.03.2003
(73) Patentinhaber: ROBERT BOSCH GMBH, 70442 Stuttgart (DE)
(72) Erfinder: ZIMMER, Joachim, 77880 Sasbach (DE)
(86) Internationale Anmeldenummer: PCT/DE2001/000920
(87) Internationale Veröffentlichungsnummer: WO 2001/087678

(56) Entgegenhaltungen:
- DE-A- 19 634 559
- US-A- 5 119 002

## Beschreibung

### Stand der Technick

Die Erfindung betrifft eine Scheibenwischvorrictung, insbesondere für ein Kraftfahrzeug nach Gattung der unabhängigen Ansprüche. Ziel dieser Scheibenwischvorrichtungen ist es, einen möglichst gleichmäßigen Wischverlauf zu erzielen.

Es sind schon Scheibenwischvorrichtungen für Kraftfahrzeuge mit steuerbaren Wischern bekannt, beispielsweise aus der DE 198 18 173 A1, bei denen die Geschwindigkeit der Wischer positions- und fahrzeuggeschwindigkeitsabhängig gesteuert wird.

Weiterhin ist aus der DE-A-196 34 559 eine Scheibenwischvorrichtung nach Gattung der unabhängigen Ansprüche bekannt.

### Vorteile der Erfindung

Die erfindungsgemäße Scheibenwischvorrichtung mit dem kennzeichnenden Merkmalen der Hauptansprüche hat den Vorteil, dass die Umkehrlagen oder Endpositionen des Wischers durch eine Veränderung der Reversierposition des Wischermotors, fahrgeschwindigkeitsunabhängig konstant gehalten werden können. Die vorhandenen Elastizitäten im Gestänge des Wischsystems können auf diese Weise durch eine Veränderung der Umkehrpunkte des Wischermotors ausgeglichen werden.

Ohne einen externen Sensor, wie beispielsweise ein Windgeschwindigkeitsmesser, kann das vorgeschriebene Wischfeld genau eingehalten werden, da die Windgeschwindigkeit, insbesondere bei den relevanten hohen Geschwindigkeiten, etwa der Fahrzeuggeschwindigkeit proportional ist.

Da die aerodynamischen Effekte bei konventionellen Wischanlagen mit Wischwinkeln im Bereich von 90° zwischen den beiden Endpositionen gegenläufig sind, ist es besonders vorteilhaft wenn die Reversierpositionen fahrgeschwindigkeitsunabhängig dieselbe Differenz aufweisen.

Darüber hinaus ist es vorteilhaft, wenn bei gleich bleibender Differenz der Reversierpositionen diese fahrgeschwindigkeitsabhängig verschiebbar sind. So können Ressourcen gespart werden und trotzdem gleichzeitig, auch bei hohen Geschwindigkeiten, ein gleich bleibend großes Wischfeld gewährleistet werden.

Ferner ist es von Vorteil, wenn die Scheibenwischvorrichtung eine bei fehlender Fahrzeuggeschwindigkeitsinformation ausgelöste Notbetriebsstufe aufweist, in der die Reversierpositionen fest vorgegeben sind. Bei Defekten im Tachometer oder in einer entsprechenden Verbindungsleitung kann auf diese Weise immer ein ausreichend großes Wischfeld gewährleistet werden.

Durch die in den Unteransprüchen aufgeführten Maßnahmen ergeben sich vorteilhafte Weiterbildungen und Verbesserungen der in den unabhängigen Ansprüchen angegebenen Merkmale.

Besonders vorteilhaft ist, wenn die Scheibenwischvorrichtung eine Speichereinrichtung aufweist, in der die Reversierpositionen, beispielsweise tabellenartig in Abhängigkeit der Fahrzeuggeschwindigkeit des Kraftfahrzeugs abgelegt sind. Auf diese Weise sind die Reversierpositionen einfach und schnell in die Scheibenwischeinrichtung zu implementieren.

Gleichfalls ist es vorteilhaft, wenn die Scheibenwischvorrichtung eine Rechnereinheit aufweist, welche die Reversierpositionen des Elektromotors mit Hilfe der Fahrzeuggeschwindigkeit bestimmt um so auch komplexere Algorithmen zur Steuerung der Reversierpositionen in Abhängigkeit der Fahrzeuggeschwindigkeit zuzulassen.

Weiterhin ist es vorteilhaft, wenn die Scheibenwischvorrichtung einen Regensensor aufweist, da auf diese Weise die Scheibenwischvorrichtung auch in Abhängigkeit eines Feuchtigkeitssignals gesteuert werden kann, um immer ein optimales Reinigungsergebnis zu erzielen.

### Zeichnungen

Ein Ausführungsbeispiel der Erfindung ist in den Zeichnungen dargestellt und in der nachfolgenden Beschreibung näher erläutert.

Es zeigen
Fig. 1a und 1b eine Windschutzscheibe eines Kraftfahrzeugs mit zwei Wischern in schematischer Darstellung,
Fig. 2a, 2b eine Seite eines Gestänge einer erfindungsgemäßen Scheibenwischvorrichtung in schematischer Darstellung.
Fig. 2c ein Diagramm in dem die Motorspannung über der Zeit t aufgetragen ist,
Fig. 3 eine erfindungsgemäße Scheibenwischvorrichtung in schematischer Darstellung.

### Beschreibung des Ausführungsbeispiels

In Fig. 1a ist eine Windschutzscheibe 10 mit dem vorgesehenen Sichtfeld 11 und zwei Wischern 12 dargestellt, welche sich in der unteren Endposition befinden. Im Betrieb pendeln die Wischer 12 zwischen der unteren Endposition und der oberen Endposition 14 um die Wischerachsen 30. Die Wischer 12 schließen zwischen oberer- und unterer Endposition einen Pendelwinkel 16 ein.

Durch die Bewegung des Fahrzeugs ergibt sich während des Betriebes eine Windströmung über die Windschutzscheibe 10, welche durch die Strömungspfeile 18 angedeutet ist. Durch diese Windströmung werden die Wischer 12 bei höheren Fahrzeuggeschwindigkeiten immer weiter nach oben gedrückt. Die untere Endposition der Wischer 12 wird daher bei höheren Geschwindigkeiten des Fahrzeugs aufgrund der Elastizitäten im Wischsystem nach oben verschoben.

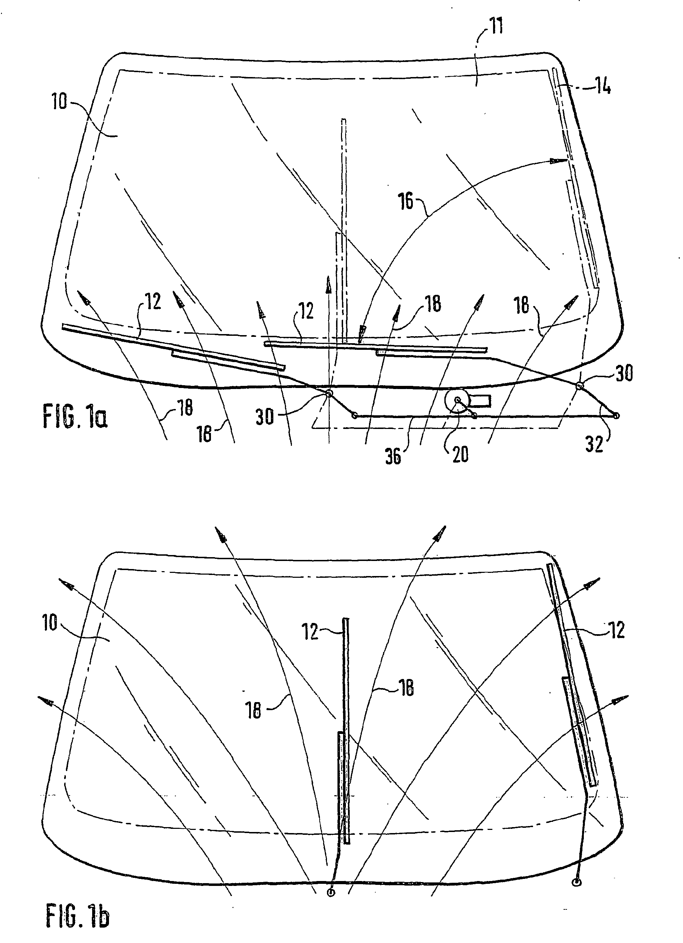

In Fig. 1b ist ebenfalls eine Windschutzscheibe 10 mit zwei Wischern 12 dargestellt, wobei sich die beiden Wischer 12 in der oberen Endposition befinden. Die Windströmung auf der Windschutzscheibe 10 ist wieder durch Strömungspfeile 18 angedeutet.

Bedingt durch die Form der Windschutzscheibe 10 werden bei höheren Geschwindigkeiten des Fahrzeugs die Wischer 12 durch den Fahrtwind nach außen gedrückt. Die obere Endposition der Wischer 12 wird daher bei höheren Fahrzeuggeschwindigkeiten noch weiter nach außen verschoben.

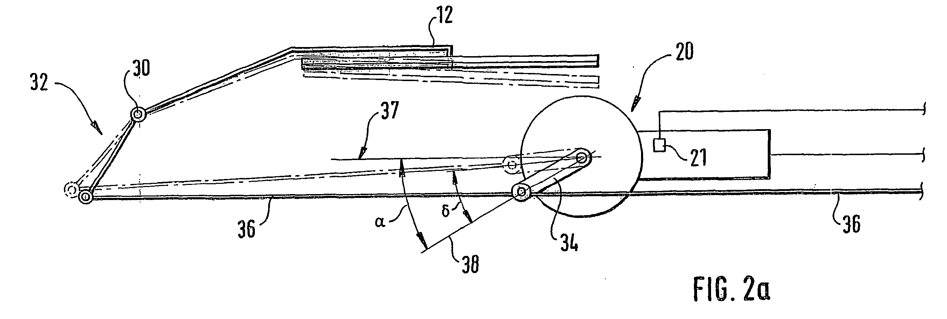

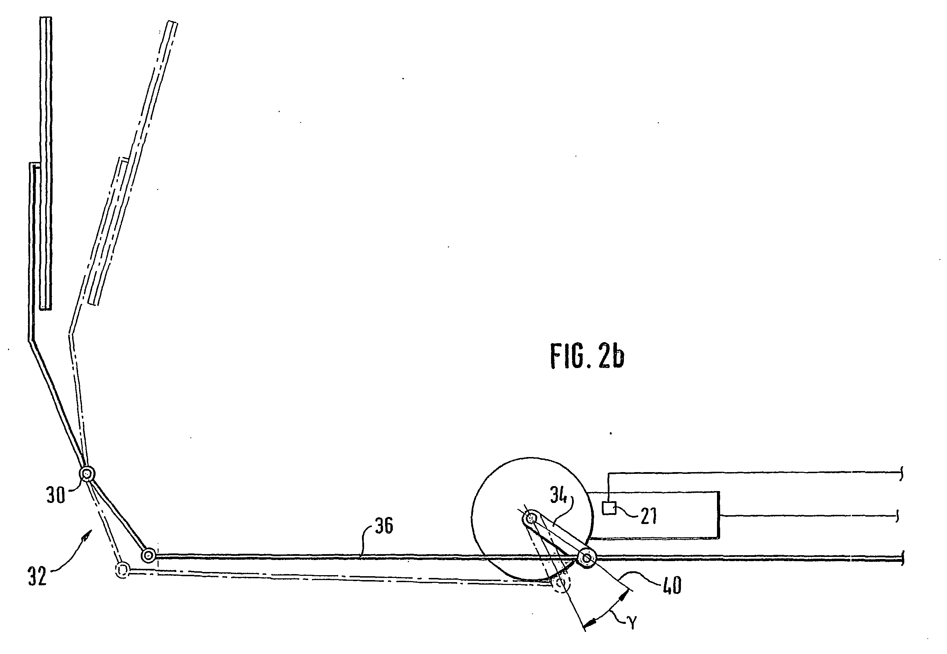

Figuren 2a und 2b zeigen ein Gestänge einer erfindungsgemäßen Scheibenwischvorrichtung in schematischer Darstellung.

In Fig. 2a ist eine Seite eines Wischergestänges in der unteren Endlage dargestellt. Die Wischerachse 30, an der der Wischer 12 befestigt ist, wird von der Schwingkurbel 32 bewegt, die vom Wischermotor 20 über die Kurbelstange 34 und die Schubstange 36 angetrieben werden. Da der Wischermotor 20 als Reversiermotor ausgebildet ist, kann er an beliebiger Position reversieren, also seine Drehrichtung und damit die Wischrichtung an jeder beliebigen Stelle ändern.

Die durchgezogenen Linien zeigen das Wischergestänge bei ruhendem Fahrzeug in der unteren Endposition der Wischer 12. In dieser befindet sich auch der Wischermotor 20 in einer unteren Reversierposition 38. Natürlich kann diese untere Reversierposition 38 auch bei niedrigen Geschwindigkeiten eingesetzt werden.

Die Reversierposition 38 ist dabei als der Drehwinkel α des Wischermotors 20 zu einer festen aber beliebigen Referenzlinie 37 zu verstehen, an dem die Laufrichtung des Wischermotors 20 im Betrieb umgekehrt wird. Aufgrund der Elastizitäten der Kurbelstange 34 ist deren Drehwinkel nicht zwangsweise mit dem Drehwinkel der Reversierposition identisch.

Mittels unterbrochener Linien ist das Wischergestänge im Fahrbetrieb bei hohen Geschwindigkeiten angedeutet. Die Reversierposition 38 des Wischermotors 20 für die untere Endposition der Wischer 12 ist hier etwas verschoben, und zwar in der Richtung, daß der Wischer 12 auf einer tieferen Position umkehren würde. Auf Grund der Windströmung wird sich der Wischer 12 jedoch nie an dieser angedeuteten Position befinden, sondern immer in die gleiche, bei Fahrbetrieb im Regelfall höherliegende untere Endlage gedrückt werden.

Ähnlich wie in Fig. 2a ist auch in Fig. 2b das Wischergestänge dargestellt, wobei sich nun der Wischer 12 in der oberen Endlage 14 befindet.

Analog zur Fig. 2a zeigen die durchgezogenen Linien das Wischergestänge bei ruhendem Fahrzeug in der oberen Endposition 14 der Wischer 12. Hier befindet sich der Wischermotor 20 in der oberen Reversierposition 40.

Die unterbrochenen Linien zeigen das Wischergestänge im Fahrbetrieb bei hohen Geschwindigkeiten. Die Reversierposition 40 des Wischermotors 20 für die obere Endposition 14 der Wischer 12 ist hier etwas nach innen verschoben. Durch die Windströmung wird der Wischer 12 jedoch immer in die obere Endlage 14 gedrückt werden.

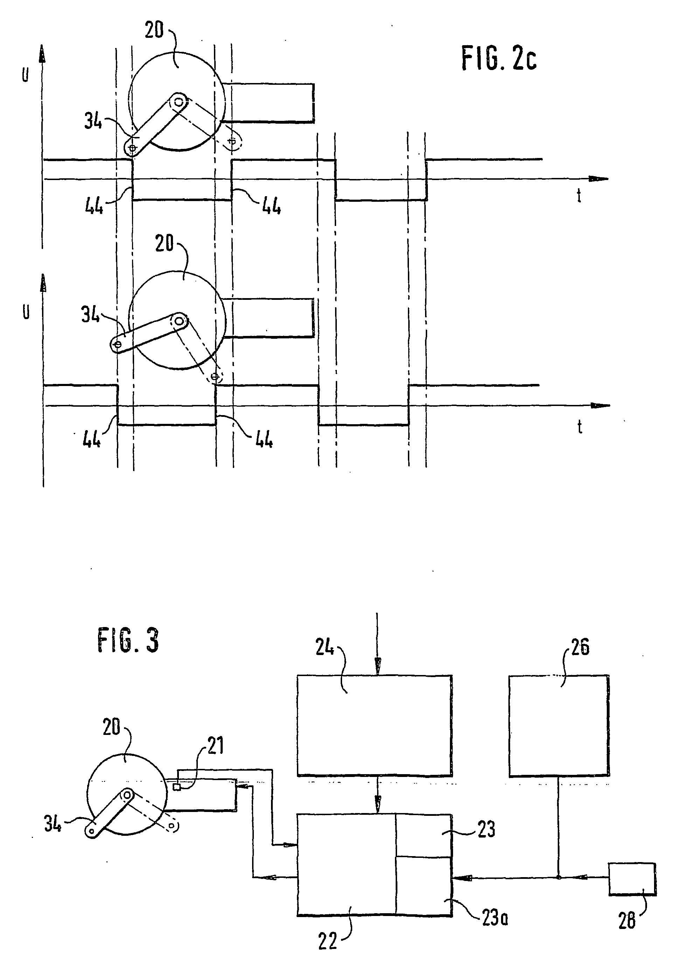

In Figur 2c sind zwei Diagramme dargestellt, in denen die am Wischermotor 20 anliegende elektrische Spannung über der Zeit aufgtragen ist. Das obere der beiden Diagramme entspricht einem Fahrzeug in Ruhestellung, das untere einem Fahrzeug bei hoher Geschwindigkeit.

Im wesentlichen entspricht die Spannungskennlinie einer Rechteckfunktion mit Flanken 44, jedoch kann diese Kurve durchaus auch einen anderen Charakter aufweisen.
An den Flanken 44 der Spannungskurve findet jeweils eine Umkehrung der Polung des Wischermotors 20 statt. Jede Flanke 44 entspricht daher jeweils der oberen oder unteren Reversierposition 38, 40. Zur Verdeutlichung wurde über jede Spannungskennlinie noch der Wischermotor 20 mit der Kurbelstange 34 eingezeichnet.

Der Vergleich der beiden Diagramme zeigt, daß bei hoher Geschwindigkeit des Fahrzeugs, der Wischermotor 20 an früheren Zeitpunkten reversiert, jedoch können diese Zeitpunkte beliebig, nach Bedarf eingestellt werden.

Die Kurbelstange 34 wird dadurch an anderen Positionen reversiert, was sich über das übrige Gestänge auf die Wischer 12 auswirkt. Die Verschiebungen der Reversierpositionen 38, 40 des Wischermotors 20 sind gerade groß vorgesehen, daß von den Wischern 12 trotzdem in den selben Endpositionen umgekehrt wird.

In Fig. 3 ist eine schematische Darstellung einer erfindungsgemäßen Scheibenwischvorrichtung gezeigt. Der Wischermotor 20, der typischerweise als elektronisch reversierbarer Elektromotor ausgebildet ist, wird von einer Steuerelektronik 22 gesteuert.

Der Wischermotor 20 ist dabei mit einem Positionssensor 21 versehen, der beispielsweise als Hallsensor ausgebildet ist, und dessen Signale an die Steuerelektronik 22 vermittelt werden. Durch den Positionssensor 21 und die Steuerelektronik 22 kann der Wischermotor 20 derart angesteuert werden, daß beliebige Positionen der Wischer 12 jederzeit angefahren werden können. Auf diese Weise ist es möglich, die Wischer 12 an jeder beliebigen Stelle der Windschutzscheibe 10 durch Umpolung der Eingangsspannung des Wischermotors 20 umkehren zu lassen, also die Reversierpositionen 38, 40 des Wischermotors 20 frei zu wählen.

Die Steuereinrichtung 22 erhält Signale der Fahrzeuggeschwindigkeit 24, die beispielsweise aus dem in jedem Kraftfahrzeug vorhandenen Tachometer abgeleitet werden können. Weiterhin erhält die Steuereinrichtung 22 Signale des Bedienhebels 26 der vorzugsweise als Lenkstockschalter ausgebildet ist. Selbstverständlich können auch weitere Signale wie beispielsweise die eines Regensensors 28 der Steuereinrichtung 22 zugeführt werden und in die Verarbeitung mit einfließen. Dazu weist die Steuereinrichtung 22 eine Speichereinrichtung 23 und eine Rechnereinheit 23a auf.

Im folgenden wird die Funktion der erfindungsgemäßen Wischanlage erläutert.

Bei stehendem Fahrzeug, also bei der Fahrzeuggeschwindigkeit Null, reversieren die Wischer 12 zwischen der oberen und der unteren Endlage. Diesen Endlagen entsprechen bei stehendem Fahrzeug bestimmte Reversierpositionen des Wischermotors 20. Da sich - wie in Figur la erläutert - die Endpositionen der Wischer 12 durch die Elastizitäten im Wischsystem mit steigender Fahrzeuggeschwindigkeit nach oben verschieben würden, werden erfindungsgemäß die Reversierpositionen des Wischermotors 20 derart verschoben, daß die Endpositionen der Wischer 12 bei allen Fahrzeuggeschwindigkeiten konstant bleiben.

Da der Wischer 12 bei steigender Fahrzeuggeschwindigkeit immer weiter nach oben gedrückt wird, bewegt der Wischermotor 20 den Wischer 12 weiter nach unten, gerade soweit, dass die Endposition des Wischers 12, in der er umkehrt, konstant bleibt. Die Kurbelstange 34 wird dazu vom Wischermotor 20 weiter ausgelenkt als dies bei ruhendem Fahrzeug notwendig wäre, das heißt, daß mit steigender Geschwindigkeit des Fahrzeugs die untere Reversierposition 38 des Wischermotors 20 weiter nach unten verschoben wird und zwar gerade so, daß ein Verschieben der Endposition des Wischers 12 vermieden wird.

Umgekehrt dazu werden die Wischer 12 in der oberen Endposition bei steigender Fahrzeuggeschwindigkeit weiter nach außen gedrückt. Um dies zu kompensieren wird die obere Reversierposition 40 nach innen verschoben. Das heißt, daß die Kurbelstange 34 vom Wischermotor 20 weniger weit ausgelenkt wird als dies bei ruhendem Fahrzeug der Fall ist.

Auf diese Weise werden die Elastizitäten des Wischsystems ausgeglichen, wodurch der Wischer 12 selbst auf der Windschutzscheibe 10 bei allen Geschwindigkeiten immer in den selben Endpositionen reversiert.

In Figur 2a ist das Wischergestänge 32, 34, 36 in der unteren Reversierposition 38 bei niedriger Fahrzeuggeschwindigkeit mittels durchgezogenen Linien, bei hoher Fahrzeuggeschwindigkeit durch unterbrochene Linien Wischergestänge 32, 34, 36 dargestellt. Bei höherer Fahrzeuggeschwindigkeit wird also die untere Reversierposition 38 um den Winkel δ verschoben.

In Figur 2b ist die obere Reversierposition 40 bei hoher Fahrzeuggeschwindigkeit mittels unterbrochener Linien, bei niedriger Fahrzeuggeschwindigkeit mittels durchgezogener Linien des Wischergestänges 32, 34, 36 dargestellt. Analog zu Figur la wird hier bei höherer Fahrzeuggeschwindigkeit die obere Reversierposition 40 um den Winkel γ verschoben.

In einer Variante der erfindungsgemäßen Scheibenwischvorrichtung kann die Differenz zwischen der unteren Reversierposition 38 in Fig. 2a und der oberen Reversierposition 40 in Fig. 2b auch konstant bleiben. Mit steigender Fahrzeuggeschwindigkeit werden die Winkel δ und γ dann identisch größer, was bedeutet, daß die Differenz der Reversierpositionen 38, 40 konstant bleibt, sich jedoch beide gleichmäßig verschieben.

## Patentansprüche

1. Scheibenwischvorrichtung, insbesondere für ein Kraftfahrzeug, mit mindestens einem zwischen zwei Endpositionen pendelbar gelagerten Wischer (12), der durch einen Elektromotor (20) antreibbar, wobei der Elektromotor als, insbesondere elektronisch, reversierbarer Elektromotor (20) ausgebildet ist, dass die beiden Endpositionen des Wischers (12) und damit der von diesen eingeschlossene Pendelwinkel (16) von Reversierpositionen (38, 40) des Elektromotors (20) bestimmt ist und dass mindestens eine Reversierposition (38, 40) des Elektromotors (20), fahrzeuggeschwindigkeitsabhängig einstellbar ist, **dadurch gekennzeichnet, dass** ein von den Reversierpositionen (38, 40) eingeschlossener Differenzwinkel fahrgeschwindigkeitsunabhängig konstant ist.

2. Scheibenwischvorrichtung, insbesondere für ein Kraftfahrzeug, mit mindestens einem zwischen zwei Endpositionen pendelbar gelagerten Wischer (12), der durch einen Elektromotor (20) antreibbar, wobei der Elektromotor als, insbesondere elektronisch, reversierbarer Elektromotor (20) ausgebildet ist, dass die beiden Endpositionen des Wischers (12) und damit der von diesen eingeschlossene Pendelwinkel (16) von Reversierpositionen (38, 40) des Elektromotors (20) bestimmt ist und dass mindestens eine Reversierposition (38, 40) des Elektromotors (20), fahrzeuggeschwindigkeitsabhängig einstellbar ist, **dadurch gekennzeichnet, dass** bei konstantem Differenzwinkel die Reversierpositionen (38, 40) fahrgeschwindigkeitsabhängig verschiebbar sind.

3. Scheibenwischvorrichtung, insbesondere für ein Kraftfahrzeug, mit mindestens einem zwischen zwei Endpositionen pendelbar gelagerten Wischer (12), der durch einen Elektromotor (20) antreibbar, wobei der Elektromotor als, insbesondere elektronisch, reversierbarer Elektromotor (20) ausgebildet ist, dass die beiden Endpositionen des Wischers (12) und damit der von diesen eingeschlossene Pendelwinkel (16) von Reversierpositionen (38, 40) des Elektromotors (20) bestimmt ist und dass mindestens eine Reversierposition (38, 40) des Elektromotors (20), fahrzeuggeschwindigkeitsabhängig einstellbar ist, **dadurch gekennzeichnet, daß** eine, bei fehlender Fahrzeuggeschwindigkeitsinformation ausgelöste Notbetriebsstufe vorgesehen ist, in der die Reversierpositionen (38, 40) fest eingestellt sind.

4. Scheibenwischvorrichtung nach einem der vorhergehenden Ansprüche, **dadurch gekennzeichnet, dass** eine Speichereinrichtung (23) vorgesehen ist, in der die Reversierposition (38, 40) des Elektromotors (20) in Abhängigkeit der Fahrzeuggeschwindigkeit des Kraftfahrzeugs abgelegt sind.

5. Scheibenwischvorrichtung nach einem der vorhergehenden Ansprüche, **dadurch gekennzeichnet, dass** eine Rechnereinheit (23a) vorgesehen ist, welche die Reversierposition (38, 40) unter Berücksichtigung der Fahrzeuggeschwindigkeit bestimmt.

6. Scheibenwischvorrichtung nach einem der vorhergehenden Ansprüche, **dadurch gekennzeichnet, dass** die Scheibenwischvorrichtung einen Regensensor (28) aufweist.

7. Scheibenwischvorrichtung nach einem der vorhergehenden Ansprüche, **dadurch gekennzeichnet, dass** die Reversierpositionen um einen Winkel von insbesondere 0 - 20°, vorzugsweise 5 - 12°, verstellbar sind.

## Claims

1. Wiper device, in particular for a motor vehicle, with at least one wiper (12) which is mounted in a manner such that it can swing in pendulum fashion between two end positions and can be driven by an electric motor (20), the electric motor being designed as an electric motor (20) which can be reversed, in particular electronically, the two end positions of the wiper (12) and therefore the pendulum angle (16) enclosed by them being determined by reversing positions (38, 40) of the electric motor (20), and at least one reversing position (38, 40) of the electric motor (20) being settable as a function of the vehicle speed, **characterized in that** a differential angle enclosed by the reversing positions (38, 40) is constant irrespective of the driving speed.

2. Wiper device, in particular for a motor vehicle, with at least one wiper (12) which is mounted in a manner such that it can swing in pendulum fashion between two end positions and can be driven by an electric motor (20), the electric motor being designed as an electric motor (20) which can be reversed, in particular electronically, the two end positions of the wiper (12) and therefore the pendulum angle (16) enclosed by them being determined by reversing positions (38, 40) of the electric motor (20), and at least one reversing position (38, 40) of the electric motor (20) being settable as a function of the vehicle speed, **characterized in that**, when the differential angle is constant, the reversing positions (38, 40) can be displaced as a function of the driving speed.

3. Wiper device, in particular for a motor vehicle, with at least one wiper (12) which is mounted in a manner such that it can swing in pendulum fashion between two end positions and can be driven by an electric motor (20), the electric motor being designed as an electric motor (20) which can be reversed, in particular electronically, the two end positions of the wiper (12) and therefore the pendulum angle (16) enclosed by them being determined by reversing positions (38, 40) of the electric motor (20), and at least one reversing position (38, 40) of the electric motor (20) being settable as a function of the vehicle speed, **characterized in that** an emergency operating stage is provided which is triggered if information about the vehicle speed is missing, and in which the reversing positions (38, 40) are set fixedly.

4. Wiper device according to one of the preceding claims, **characterized in that** a storage device (23) is provided in which the reversing positions (38, 40) of the electric motor (20) as a function of the vehicle speed of the motor vehicle are stored.

5. Wiper device according to one of the preceding claims, **characterized in that** a computer unit (23a) is provided which determines the reversing positions (38, 40) taking the vehicle speed into consideration.

6. Wiper device according to one of the preceding claims, **characterized in that** the wiper device has a rain sensor (28).

7. Wiper device according to one of the preceding claims, **characterized in that** the reversing positions can be adjusted by an angle of, in particular, 0-20°, preferably 5-12°.

## Revendications

1. Dispositif d'essuie-glace, notamment pour véhicule automobile, comportant au moins un balai d'essuie-glace (12) monté de manière oscillante entre deux positions de fin de course, ce balai étant entraîné par un moteur électrique (20),
le moteur électrique étant notamment réalisé comme moteur électrique électronique réversible (20),
les deux positions de fin de course du balai d'essuie-glace (12) et ainsi l'angle d'oscillation (16) compris entre ces positions de fin de course étant défini par les positions d'inversion (38, 40) du moteur électrique (20) et au moins une position d'inversion (38, 40) du moteur électrique (20) se réglant en fonction de la vitesse du véhicule,
**caractérisé en ce que**
différence d'angle compris entre les positions d'inversion (38, 40) est constante indépendamment de la vitesse du véhicule.

2. Dispositif d'essuie-glace, notamment pour véhicule automobile, comportant au moins un balai d'essuie-glace (12) monté de manière oscillante entre deux positions de fin de course, ce balai étant entraîné par un moteur électrique (20),
le moteur électrique étant notamment réalisé comme moteur électrique électronique réversible (20),
les deux positions de fin de course du balai d'essuie-glace (12) et ainsi l'angle d'oscillation (16) compris entre ces positions de fin de course étant défini par les positions d'inversion (38, 40) du moteur électrique (20) et au moins une position d'inversion (38, 40) du moteur électrique (20) se réglant en fonction de la vitesse du véhicule,
**caractérisé en ce que**
pour une différence d'angle, constante, les positions d'inversion (38, 40) se déplacent en fonction de la vitesse du véhicule.

3. Dispositif d'essuie-glace, notamment pour véhicule automobile, comportant au moins un balai d'essuie-glace (12) monté de manière oscillante entre deux positions de fin de course, ce balai étant entraîné par un moteur électrique (20),
le moteur électrique étant notamment réalisé comme moteur électrique électronique réversible (20),
les deux positions de fin de course du balai d'essuie-glace (12) et ainsi l'angle d'oscillation (16) compris entre ces positions de fin de course étant défini par les positions d'inversion (38, 40) du moteur électrique (20) et au moins une position d'inversion (38, 40) du moteur électrique (20) se règlant en fonction de la vitesse du véhicule,
**caractérisé par**
un niveau de fonctionnement de secours pour lequel les positions d'inversion (38, 40) sont réglées de manière fixe, ce niveau de fonctionnement de secours étant déclenché en cas d'absence d'information de vitesse du véhicule.

4. Dispositif d'essuie-glace selon l'une des revendications précédentes,
**caractérisé par**
une installation de mémoire (23) dans laquelle sont enregistrées les positions d'inversion (38, 40) du moteur électrique (20) en fonction de la vitesse de déplacement du véhicule.

5. Dispositif d'essuie-glace selon l'une des revendications précédentes,
**caractérisé par**
une unité de calcul (23a) qui définit les positions d'inversion (38, 40) en tenant compte de la vitesse de déplacement du véhicule.

6. Dispositif d'essuie-glace selon l'une quelconque des revendications précédentes,
**caractérisé en ce que**
le dispositif d'essuie-glace comporte un capteur de pluie (28).

7. Dispositif d'essuie-glace selon l'une quelconque des revendications précédentes,
**caractérisé en ce que**
les positions d'inversion se règlent d'un angle notamment compris entre 0 et 20° et de préférence entre 5 et 12°.
